Europäisches Patentamt

European Patent Office

Office européen des brevets

(11) Veröffentlichungsnummer: **0 292 430**
**A1**

(12) **EUROPÄISCHE PATENTANMELDUNG**

(21) Anmeldenummer: 88810295.1

(22) Anmeldetag: 05.05.88

(51) Int. Cl.⁴: **H 02 H 7/24**

(30) Priorität: 18.05.87 CH 1900/87

(43) Veröffentlichungstag der Anmeldung:
23.11.88 Patentblatt 88/47

(84) Benannte Vertragsstaaten:
CH DE FR GB IT LI

(71) Anmelder: C.A. Weidmüller GmbH & Co.
Klingenbergstrasse 16
D-4930 Detmold (DE)

(72) Erfinder: Frikkee, Arian
Felsenweg 16a
D-4930 Detmold (DE)

(74) Vertreter: Hepp, Dieter et al
HEPP & Partner AG Marktgasse 18
CH-9500 Wil (CH)

(54) **Verfahren und Vorrichtung für den Ueberspannungsschutz eines elektrischen Leitersystems.**

(57) Die in einem Gasableiter (1) auftretenden Lichtimpulse werden optisch erfasst und in einer Auswertvorrichtung (2) registriert. Bei einer bestimmten Intensität dieser Lichtimpulse betätigt die Auswertvorrichtung eine Schaltvorrichtung (3, 4), welche die Stromzufuhr zum Gasableiter unterbricht. Da ein bei einer Ueberspannung auftretender Lichtbogen nicht mehr mittels einer Schmelzsicherung gelöscht werden muss, wird die Ausfallzeit der Stromversorgung auf ein Minimum reduziert.

EP 0 292 430 A1

# Beschreibung

## Verfahren und Vorrichtung für den Ueberspannungsschutz eines elektrischen Leitersystems

Die Erfindung betrifft eine Vorrichtung für den Ueberspannungsschutz eines elektrischen Leitersystems gemäss dem Oberbegriff von Anspruch 1. Derartige Systeme dienen dazu, elektronische Schaltungen von Ueberspannungen, wie sie z.B. bei Blitzschlagen auftreten können, zu schutzen. Bekanntlich genügen bei Halbleiterschaltungen bereits energiearme Spannungsimpulse, um Beschädigungen und Betriebsstorungen zu verursachen.

Der Einsatz von Gasableitern für den Ueberspannungsschutz ist bereits seit langem bekannt und gebräuchlich. Derartige Gasableiter werden in der Praxis jedoch immer mit anderen Schutzelementen kombiniert. Weit verbreitet ist die Parallelschaltung eines Gasableiters mit einem Varistor. Der Gasableiter hat nämlich den Nachteil, dass nach der Zündung durch den Stossstrom die Ableitung durch den Betriebsstrom aufrechterhalten wird. Diese Erscheinung kann durch einen Varistor gemildert oder ganz ausgeschaltet werden. Bei einer Parallelschaltung leitet der Varistor beispielsweise Ströme bis ca. 2000 Ampere ab, ohne dass der Gasableiter zündet. In diesem Bereich gibt es deshalb auch keine Löschprobleme. Bei noch grösseren Strömen wird der Spannungsabfall am Varistor allerdings so gross, dass der Gasableiter zündet und damit den Varistor entlastet. Der im Gasableiter entstehende Lichtbogen muss nun durch eine Schmelzsicherung abgeschaltet werden. Durch das Hinzuschalten des Varistors wird das Durchbrennen der Schmelzsicherung auf die absolut notwendigen Fälle beschränkt. Allerdings werden bei jeder im Varistor auftretenden Ueberspannung bestimmte Kristallgefüge zerstört, wodurch sich mit jeder Ueberspannungsableitung die Ansprech spannung des Varistors reduziert. Bei einer Vielzahl von Ableitungsimpulsen kann sich die Ansprechspannung im Varistor der Nennspannung annähern. Dies führt jedoch wiederum zu einem ständigen Durchschalten und damit zu einer starken Erwärmung. Um diesen Missstand zu beseitigen, sind den Varistoren Bimetallschalter zugeordnet, die bei starker Erwärmung öffnen und eine Meldung an eine Warte abgeben. Bei geoffneten Bimetallschaltern würden allerdings die Gasableiter bei jeder Ueberspannung zunden und, wie erwähnt, die vorgeschaltete Schmelzsicherung dauernd auslösen und damit auch die nachgeschaltete Anlage dauernd ausser Betrieb setzen. Dies könnte ersichtlicherweise fatale Folgen haben.

Aus der DE-OS-28 51 537 ist eine Schaltungsanordnung bekannt, bei welcher ein Schutzwiderstand für eine Funkenstrecke vor Ueberlastung geschützt werden soll. Dabei wird beim Auftreten von Ueberspannungen und entsprechender Entladung in der Funkenstrecke eine Abschalteinrichtung betatigt, welche eine Schaltstrecke unterbricht. Diese Anordnung dient der dauerhaften Abschaltung von Stromkreisen beim Auftreten von Ueberspannungen. Die Abschaltvorrichtung soll dabei den Schutzwiderstand für die Funkenstrecke vor Ueberlastung schützen.

Aus der CH-PS-525 567 ist es bekannt, mittels einer Feinsicherung eine Sprengladung zur Explosion zu bringen, mit welcher die Masseverbindung eines Ueberspannungsableiters mit Funkenstrecke unterbrochen werden soll. Auch dabei handelt es sich um einen Ueberspannungsschutz, der die Leitungsführung dauerhaft unterbricht - nach dem einmaligen Auslösen der Sprengladung ist der Ueberspannungsableiter im wesentlichen ausser Betrieb.

Aufgabe der Erfindung ist es demgegenüber eine Vorrichtung für den Ueberspannungsschutz eines elektrischen Leitersystems zu schaffen, bei welchem das Leitungsnetz vor geringfügigen oder nur kurzzeitig auftretenden Ueberspannungen geschützt wird, ohne dass dabei die Stromzufuhr zum Leitungsnetz z.B. durch Auslösen einer Sicherung dauerhaft unterbrochen wird. Diese Aufgabe wird durch eine Vorrichtung mit den Merkmalen von Anspruch 1 gelöst. Das Aufleuchten des Gasableiters beim Auftreten von Ueberspannung führt zum sofortigen Ansprechen der Auswertvorrichtung, die ihrerseits die Schaltvorrichtung auslöst und die Stromzufuhr unterbricht. Dies wiederum führt zum Erlöschen der Entladung im Gasableiter, die Auswertschaltung kann entsprechend deaktiviert werden und die Schaltvorrichtung legt die Gesamtanordnung wieder an Spannung, ohne dass dabei die Schmelzsicherung ausgelöst hätte. Dadurch wird also auf optimal einfache Weise kurzzeitige Ueberspannung abgeleitet, ohne dass die Anlage abgeschaltet würde oder der Verbraucher dauerhaft von der Versorgungsspannung getrennt würde. Die Schmelzsicherung wird also nur dann auslösen, wenn die Ueberspannung für einen längeren Zeitraum anhält. Gleichzeitig wird durch die erfindungsgemässe Vorrichtung erreicht, dass der Lichtbogen im Gasableiter nicht mehr durch die Schmelzsicherung gelöscht werden muss, deren Durchbrennen ebenfalls den nachgeschalteten Verbraucher ausser Betrieb setzen würde.

Die Funktion der Vorrichtung bereitet dabei in der Praxis keinerlei Probleme. Die Zeit zur Registrierung eines Lichtimpulses im Gasableiter und die damit verbundene Auslösung des Relais lässt sich mit bekannten elektronischen Schaltungsanordnungen auf ca. 20 Millisekunden einstellen. Dagegen beträgt die Ansprechzeit der Schmelzsicherung bei Impulsstrom ca. eine Sekunde.

Wenn der Gasableiter zur Uebertragung von Lichtimpulsen über eine Lichtleitfaser mit der Auswertvorrichtung verbunden ist, kann diese an einer geeigneten Stelle auch weit entfernt vom Gasableiter angeordnet werden. Aus wartungstechnischen Gründen ist der Gasableiter vorteilhaft in einer auswechselbaren Halterung fixierbar, wobei die Lichtleitfaser in eine relative zur Halterung feststehende Kupplungsstelle mundet. Auf diese Weise konnen defekte Gasableiter leicht ausgetauscht bzw. überprüft werden.

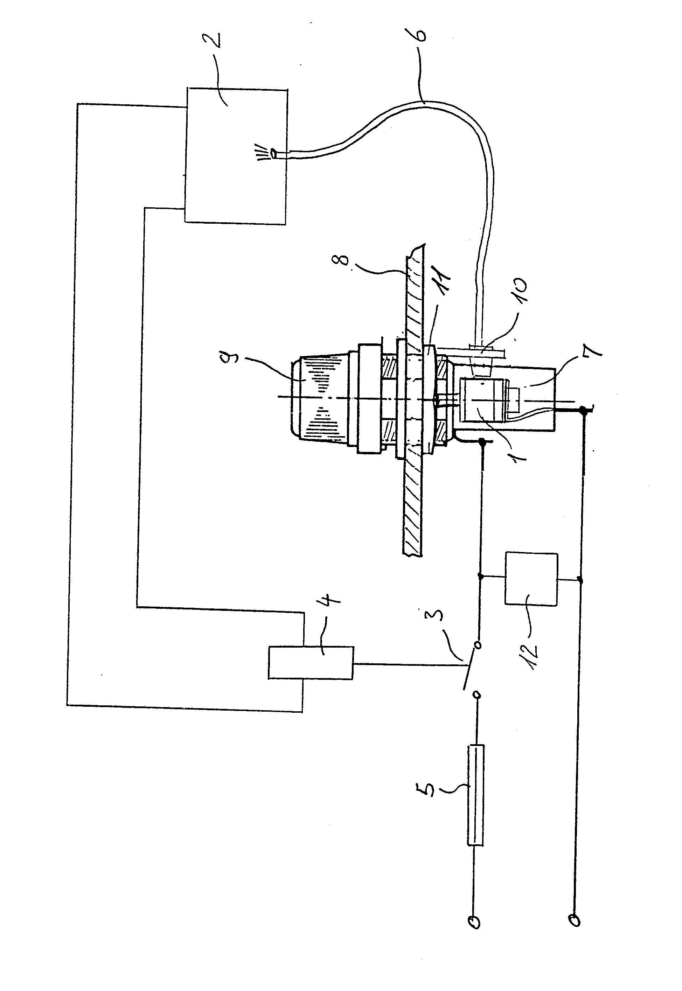

Die einzige Figur zeigt in stark vereinfachter Darstellung eine erfindungsgemässe Vorrichtung. Ein Gasableiter 1, wie er heute bereits in zahlreichen standardisierten Varianten erhältlich ist, ist in eine Halterung 7 eingeschoben oder eingeklemmt. Die Halterung 7 ist an einem Schraubkopf 9 befestigt, der in eine Klemmfassung 11 an einer Gehausewand 8 einschraubbar ist. Mit dieser Anordnung kann ein defekter Gasableiter von aussen her leicht ausgetauscht werden, ohne dass Gehäuseteile geöffnet werden mussen.

Relativ feststehend zur entfernbaren Halterung 7 ist eine Kupplungsstelle 10 angeordnet, an die eine Lichtleitfaser 6 angeschlossen ist. Die Kupplungsstelle 10 ist so angeordnet, dass bei eingesetztem Gasableiter 1 Lichtimpulse aus dem Gasableiter in die Lichtleitfaser 6 übertragen werden. Geeignete Anschlussverbindungen für Lichtleitfasern sind bereits bekannt und gebräuchlich und beispielsweise in der DE-A-32 31 409 oder in der DE-A-23 08 294 beschrieben. Die Lichtleitfaser 6 führt in eine nicht näher beschriebene Auswertvorrichtung 2, in welcher die Lichtimpulse registriert und gezahlt werden. Dies ist durch an sich bekannte optoelektronische Vorrichtungen möglich.

Blitzzähler, welche für derartige Zwecke geeignet sind, können heute als fertige Bauteile gekauft werden. Die Zählung der Blitze erfolgt einerseits, um die Alterung der Gasableiter zu berücksichtigen, welche von der Häufigkeit der Aktivierung abhängig ist. So können die Gasableiter rechtzeitig ausgetauscht werden, bevor alterungsbedingte Defekte auftreten. Anderseits ist die Zählung der Blitze aber auch aus statistischen Grunden von Interesse. Es lässt sich z.B. anhand eines ausgedruckten Protokolls genau ermitteln, wie oft das Leitersystem einer Ueberspannung innerhalb eines bestimmten Zeitraums ausgesetzt war.

An die Auswertvorrichtung 2 ist ein Relais 4 angeschlossen, das durch die Auswertvorrichtung bei einer bestimmten Intensität der Lichtsignale aktiviert wird. Das Relais öffnet den Schalter 3 und unterbricht so den Stromkreis. Vor dem Schalter 3 ist eine Schmelzsicherung 5 vorgeschaltet. Tritt am Leitersystem eine Ueberspannung auf, so äussert sich diese im Gasableiter durch eine Entladung und damit durch eine Lichtemission. Diese wird in der Auswertvorrichtung ermittelt, die das Relais 4 betätigt. Bevor die relativ träge Schmelzsicherung 5 betätigt werden kann, wird der Stromkreis durch das Relais 4 unterbrochen. Damit reisst auch der Lichtbogen im Gasableiter wieder ab und die Auswertvorrichtung gibt dem Relais 4 wiederum den Befehl zum Schliessen des Schalters 3. Ein allfälliger Unterbruch der Stromzufuhr zu einem Verbraucher 12, der z.B. elektronische Schaltungen enthält und zu dem der Gasableiter 1 parallel geschaltet ist, wird somit ersichtlicherweise auf Sekundenbruchteile beschrankt. Die Schmelzsicherung 5 wird erst ausgelost, wenn beim erfindungsgemässen Ueberspannungsschutz ein Defekt auftritt und das Relais 4 nicht mehr innerhalb der Ansprechzeit der Schmelzsicherung den Stromkreis unterbrechen kann.

Je nach Anwendungsfall wird die Schaltvorrichtung vorzugsweise ein elektronisches Schaltrelais aufweisen, um die gewunschten kurzen Schaltzeiten zu erreichen.

## Patentansprüche

1. Vorrichtung für den Ueberspannungsschutz eines elektrischen Leitersystems, bei der eine Ueberspannung mittels Glimm- oder Lichtbogen-Entladung in einer Funkenstrecke ableitbar ist, wobei der Funkenstrecke eine Auswertvorrichtung (2) zugeordnet ist, mit der Entladungen registrierbar sind, und dass die Auswertvorrichtung (2) mit einer Schaltvorrichtung (3, 4) verbunden ist, mit der die Stromzufuhr unterbrechbar ist, dadurch gekennzeichnet, dass die Funkenstrecke einen Gasableiter (1) aufweist, dass in Serie zur Schaltvorrichtung eine Schmelzsicherung (5) angeordnet ist, und dass die Ansprech- und Auslösezeit der Auswertvorrichtung (2) und der Schaltvorrichtung (3, 4) eine kürzere Ansprechzeit als die Schmelzsicherung (5) aufweist.

2. Vorrichtung nach Anspruch 1, dadurch gekennzeichnet, dass die Schaltvorrichtung ein Relais (4) mit kürzerer Ansprechzeit als die Schmelzsicherung (5) aufweist.

3. Vorrichtung zum Uebertragen der Lichtimpulse eines Gasableiters an eine Auswertungsvorrichtung, insbesondere nach Anspruch 1 oder 2, dadurch gekennzeichnet, dass der Gasableiter (1) zur Uebertragung von Lichtimpulsen über eine Lichtleitfaser (6) mit der Auswertvorrichtung (2) verbunden ist.

4. Vorrichtung zum Anordnen eines Gasableiters an einem Ueberspannungs-Schutz-System, bei dem Ueberspannung mittels Glimm- oder Lichtbogen-Entladung im Gasableiter abgeleitet wird und wobei eine optische Auswertvorrichtung (2) mittels einer Lichtleitfaser (6) mit dem Gasableiter (1) verbunden ist, dadurch gekennzeichnet, dass der Gasableiter (1) in einer auswechselbaren Halterung (7) fixierbar ist, und dass die Lichtleitfaser (6) in eine relativ zur Halterung feststehende Kupplungsstelle mündet.

0292430

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y,D | DE-A-2 851 537 (LICENTIA) <br> * Das ganze Dokument * <br> --- | 1-3 | H 02 H 7/24 |
| Y,D | CH-A- 525 567 (SPRECHER & SCHUH) <br> * Spalte 1, Zeilen 1-39 * <br> --- | 1,2 | |
| Y | DE-A-3 612 090 (SIEMENS) <br> * Figur 1; Anspruch 1 * <br> --- | 3 | |
| D,A | DE-A-3 231 409 (ALSTHOM) <br> --- | | |
| D,A | DE-A-2 308 294 (CAVIS-CAVETTI) <br> ----- | | |

**RECHERCHIERTE SACHGEBIETE (Int. Cl.4)**

H 02 H
H 01 T

Der vorliegende Recherchenbericht wurde für alle Patentansprüche erstellt

| Recherchenort | Abschlußdatum der Recherche | Prüfer |
|---|---|---|
| DEN HAAG | 18-07-1988 | KOLBE W.H. |